(19) Europäisches Patentamt
European Patent Office
Office européen des brevets

(11) Veröffentlichungsnummer : **0 071 142**
**B1**

(12) **EUROPÄISCHE PATENTSCHRIFT**

(45) Veröffentlichungstag der Patentschrift : **18.09.85**

(21) Anmeldenummer : **82106481.3**

(22) Anmeldetag : **19.07.82**

(51) Int. Cl.⁴ : **C 08 G 18/67**, C 09 J 3/16, C 09 J 3/14, C 08 J 5/18, B 32 B 27/04

(54) **Verfahren zum Verkleben von Folien.**

(30) Priorität : **31.07.81 DE 3130430**

(43) Veröffentlichungstag der Anmeldung : **09.02.83 Patentblatt 83/06**

(45) Bekanntmachung des Hinweises auf die Patenterteilung : **18.09.85 Patentblatt 85/38**

(84) Benannte Vertragsstaaten : **AT BE CH DE FR GB IT LI SE**

(56) Entgegenhaltungen :
**DE-A- 2 913 676**
**FR-A- 2 223 440**
**FR-A- 2 289 589**
**US-A- 3 644 569**

(73) Patentinhaber : **BAYER AG**
**Konzernverwaltung RP Patentabteilung**
**D-5090 Leverkusen 1 Bayerwerk (DE)**

(72) Erfinder : **Neuhaus, Karl-Friedrich, Dr.**
**Bodelschwinghstrasse 14**
**D-4150 Krefeld 1 (DE)**
Erfinder : **Müller-Albrecht, Horst, Dr.**
**Roggendorfstrasse 59**
**D-5000 Köln 80 (DE)**
Erfinder : **Dollhausen, Manfred, Dr.**
**Herzogenfeld 21**
**D-5068 Odenthal (DE)**
Erfinder : **Perrey, Hermann, Dr.**
**Auf der Rheinaue 8**
**D-4150 Krefeld 11 (DE)**

**EP 0 071 142 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein neues Verfahren zum Verkleben von Folien mit sich selbst oder anderen Substraten unter Verwendung neuartiger, durch Elektronenstrahlen oder UV-Licht vernetzbarer, eine Isocyanatkomponente und eine Hydroxylkomponente aufweisender Zweikomponenten-Klebstoffe.

Die Kaschierung, d. h. die Verklebung von Folien verschiedenen Typs zu Verbundfolien, erfolgt in der Praxis zum überwiegenden Teil mittels in organischen Lösungsmitteln gelösten Klebstoffkomponenten, wobei dem Lösungsmittel u. a. die Aufgabe zukommt, die hochviskosen, teils festen Klebstoffe in eine applizierbare Form zu überführen. Dementsprechend ist es für eine einwandfreie Verklebung zwingend notwendig, diese Lösungsmittel dem System nach der Applikation auf eine der Folien und vor der Verklebung der Folien zum Folienverbund wieder zu entziehen.

Dieser aufwendige Verfahrensschritt wird bei der Verwendung von lösungsmittelfreien Kaschierklebstoffen vermieden.

Bekannt sind beispielsweise lösungsmittelfreie hochviskose Urethane mit Isocyanatendgruppen, die mittels Erwärmung auf Temperaturen von etwa 100 °C in eine verarbeitungsfähige Konsistenz gebracht werden und, auf die Folie aufgetragen, feuchtigkeitshärtend eine Verklebung ergeben (vgl. z. B. DE-OS 2 549 227). Als problematisch erweist sich bei diesen Systemen in der Praxis oft die Forderung nach ausreichender Stabilität dieser Reaktivklebstoffe im beheizten Auftragswerk (Pan-life) bei gleichzeitiger hoher Anfangshaftung (schnelles Abreagieren) der Verbundfolie. Daneben weisen diese Systeme im allgemeinen die üblichen Nachteile eines feuchtigkeitshärtenden 1-Komponentenklebstoffes auf : Die Aushärtungsgeschwindigkeit hängt von der Menge der zur Verfügung stehenden Feuchtigkeit ab, die je nach Folientyp und Jahreszeit naturgemäß starken Schwankungen unterliegt. Zur Behebung dieses Nachteils muß häufig eine künstliche Zufuhr von Feuchtigkeit in Form von Wassernebel in den Klebespalt vorgenommen werden.

Als lösungsmittelfreie strahlenhärtbare Klebmasse, die mittels UV-Licht oder Elektronenstrahlen härtbar sind, werden in der Patentliteratur ethylenisch ungesättigte Präpolymere, die beispielsweise durch Umsetzung von Hydroxyalkyl(meth) acrylaten, Polyisocyanaten und gegebenenfalls Polyether- und/oder Polyesterpolyolen hergestellt sind, beschrieben. Derartige Massen werden z. B. in der FR-PS 23 61 452 ; US-PS 40 18 333, DE-OS 23 24 822, DE-OS 23 23 373 und DE-OS 2 102 382 beansprucht. Diese dort angeführten ethylenisch ungesättigten Präpolymeren, die teilweise auch als Bindemittel für strahlenhärtbare Lacke beansprucht werden, mögen in vielen Bereichen als Klebstoffkomponente gute Resultate zeigen, in der Kaschiertechnik, wo Schichtstärken von maximal 0,5-5 µm (1µm = $10^{-3}$ mm) üblich sind, konnten diese Produkte bislang wenig überzeugen.

Die DE-OS 29 13 676 beschreibt schließlich ein Verfahren zur Herstellung von Verbundfolien mittels lösungsmittelfreier Klebstoffe, wobei als flüssiger Klebstoff oligomere und/oder polymere Ester und/oder Ether, die sowohl freie Isocyanatgruppen als auch freie (Meth)Acrylatgruppen in einem Molekül enthalten, Verwendung finden. Diese Systeme weisen die für 1-Komponenten-Urethan-Klebstoffsysteme bekannten Nachteile auf, das Maximum der Klebfestigkeit des Verbundes wird erst nach etwa 1 bis 3 Wochen erreicht.

Weiterhin bekannt sind lösungsmittelfreie 2-Komponentensysteme, die aus einer Polyolkomponente und einer (Poly)-isocyanatkomponente bestehen (vgl. z. B. « Kaschieren ohne Lösungsmittel, Papier und Kunststoffverarbeiter Nr. 7 (1978). Diese Systeme zeigen im allgemeinen ein deutlich höheres Niveau der Endhaftung als 1-Komponentensysteme. Darüber hinaus bieten sie zusätzlich die Möglichkeit, durch Variation der Formulierungen, spezielle gewünschte Eigenschaften einzustellen, wodurch naturgemäß das Anwendungsspektrum dieser 2-Komponentensysteme wesentlich erweitert ist.

Nach dem Stand der Technik zeigen die lösungsmittelfreien 1- und 2-Komponentensysteme, angewandt auf den Folienverbund, im allgemeinen jedoch nur geringe Anfangshaftungen unmittelbar nach dem Kaschiervorgang. Dieser Mangel kann beispielsweise bei der Aufwicklung der Verbundfolie infolge der ungenügenden Haftung der Folien gegeneinander zu einer Verschiebung dieser in Längsrichtung (Teleskop-Effekt) oder zu einer Hohlraum- und Faltenbildung (Apfelsinenhaut-Effekt) führen.

Der Erfindung lag somit die Aufgabe zugrunde, ein neues Verfahren zum Verkleben von Folien unter Verwendung neuartiger Klebstoffe zur Verfügung zu stellen, welches insbesondere die Herstellung von Folienverbunden gestattet, ohne mit den genannten Nachteilen der Verfahren des Standes der Technik behaftet zu sein, d. h. welches insbesondere die Herstellung von Verklebungen einer hohen Anfangsfestigkeit gestattet.

Diese Aufgabe konnte durch das nachstehend näher beschriebene erfindungsgemäße Verfahren gelöst werden.

Gegenstand der Erfindung ist ein Verfahren zum Verkleben von Folien mit sich selbst oder anderen Substraten durch Auftragen eines mittels energiereicher Strahlung vernetzbaren Klebstoffs auf die zu verklebende Folie in einer Schichtdicke von 0,5-5 µm, Zusammenführen der beschichteten Folie mit sich selbst oder dem genannten Substrat unter vorhergehender, gleichzeitiger oder nachträglicher Vernetzung des auf die Folie aufgetragenen Klebstoffs durch energiereiche Strahlung, dadurch gekennzeichnet, daß man als Klebstoff, gegebenenfalls einen Fotoinitiator und gegebenenfalls copolymerisierbare Monomere, sowie gegebenenfalls weitere Hilfs- und Zusatzstoffe enthaltende Zweikomponenten-Gemische bestehend aus

A mindestens einem Polyisocyanat und

B mindestens einer, sowohl (i) (Meth)Acryloylgruppen als auch (ii) Hydroxylgruppen aufweisenden, Verbindung

in einem Äquivalentverhältnis von Hydroxylgruppen zu Isocyanatgruppen von 0,8 : 1 bis 1,3 : 1 entsprechenden Mengen, verwendet.

Der Begriff « (Meth)Acryloyl » beinhaltet im Sinne dieser Erfindung sowohl Derivate der Methacrylsäure als auch Derivate der Acrylsäure sowie Mischungen dieser.

Als Polyisocyanate der Komponente A der erfindungsgemäßen Klebmasse kommen aliphatische, cycloaliphatische, araliphatische, aromatische und heterocyclische Polyisocyanate, wie sie z. B. von W. Siefken in Justus Liebigs Annalen der Chemie 562, Seite 75-136 beschrieben werden, beispielsweise solche der Formel

$$Q(NCO)_n$$

in der

n = 2-4 vorzugsweise 2-3

Q einen aliphatischen Kohlenwasserstoffrest mit 4-15, vorzugsweise 5-13 C-Atomen, einen aromatischen Kohlenwasserstoffrest mit 6-15, vorzugsweise 6-13 C-Atomen, oder einen araliphatischen Kohlenwasserstoffrest mit 3-15, vorzugsweise 8-13 C-Atomen bedeutet, in Frage.

Beispielsweise seien genannt :

Ethylendiisocyanat, 1,4-Tetramethylendiisocyanat, 1,6-Hexamethylendiisocyanat, 1,12-Dodecandiisocyanat, Cyclo-butan-1,3-diisocyanat, Cyclohexan-1,3- und -1,4-diisocyanat sowie beliebige Gemische dieser Isomeren, 1-Isocyanato-3,3,5-tri-methyl-5-isocyanatomethyl-cyclohexan (DE-AS 12 02 785, US-PS 34 01 190), 2,4- und 2,6-Hexa-hydrotoluylendiisocyanat sowie beliebige Gemische dieser Isomeren, Hexahydro-1,3- und/oder -1,4-phenylen-diisocyanat, Perhydro-2,4'- und/oder -4,4'-diphenylmethandiisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat sowie beliebige Mischungen dieser, Naphthalin-1,5-diisocyanat, am aromatischen Kern durch eine oder mehrere Alkylgruppen mit 1-3 C-Atomen substituierte 2,4- und 2,6-Toluylen-diisocyanat sowie an den aromatischen Kernen durch eine oder mehrere Alkyl-gruppen mit 1-3 C-Atomen substituiertes 4,4'- und 2,4'-Diisocyanatodiphenylmethan.

Gegebenenfalls können auch höherfunktionelle Isocyanate wie z. B. Triphenylmethantriisocyanat und Destillationsrückstände aus der Diphenylmethandiisocyanat-Gewinnung eingesetzt werden.

Weiterhin geeignet sind NCO-haltige Umsetzungsprodukte aus einem der vorstehenden Diisocyanate und einem Polyol wie z. B. das Anlagerungsprodukt von Toluylendiisocyanat an Trimethylolpropan oder auch das Umsetzungsprodukt aus 3 Mol Hexamethylendiisocyanat und 1 Mol Wasser (Biuret).

Als Komponente A) besonders bevorzugt sind aromatische Diisocyanate ausgewählt aus der Gruppe bestehend aus 2,4-Diisocyanatotoluol, 2,6-Diisocyanatotoluol, Gemischen dieser Isomeren, 2,4'-Diisocyanatodiphenylmethan, 4,4'-Diisocyanatodiphenylmethan und Gemischen dieser Isomeren oder Isocyanatgruppen aufweisende Umsetzungsprodukte derartiger Diisocyanate mit 2- und/oder 3-wertigen Alkoholen des Molekulargewichtsbereichs 62-700 wie z. B. Ethylenglykol, Butandiol-1,2, Trimethylolpropan, Propandiol-1,2, Dipropylenglykol oder Polypropylenglykolen des genannten Molekulargewichtsbereichs. Unter « Isocyanatgruppen aufweisenden Umsetzungsprodukten » sind hierbei sowohl praktisch reine Umsetzungsprodukte, wie das durch Umsetzung von 3 Mol 2,4-Diisocyanatotoluol mit einem Mol Trimethylolpropan erhältliche Urethangruppen aufweisende Triisocyanat als auch mit unterschüssigen Mengen an Alkoholen der genannten Art modifizierte Polyisocyanate, wie z. B. das mit 0,1-0,3 Mol Tri- und/oder Tetrapropylenglykol pro Mol Diisocyanat verflüssigte 4,4'-Diisocyanatodiphenylmethan zu verstehen. Besonders bevorzugt sind bei Raumtemperatur flüssige Polyisocyanate der genannten Art.

Bei der Komponente B) handelt es sich um beliebige, vorzugsweise aliphatische Hydroxylgruppen und (Meth)Acryloylgruppen aufweisende Verbindungen bzw. Gemische derartiger Verbindungen, die (bei Vorliegen von Gemischen im statistischen Mittel) bei einer Hydroxylzahl von 20 bis 600, vorzugsweise 20 bis 250, 1 bis 3, vorzugsweise 1 bis 2 Hydroxylgruppen pro Molekül und pro 100 Molekulargewichtseinheiten 0,012 bis 1,12, vorzugsweise 0,03 bis 0,5 in Form der (Meth)Acryloylgruppen vorliegenden olefinische Doppelbindungen aufweisen. Die Verbindungen bzw. Gemische von Verbindungen sollen vorzugsweise bei Raumtemperaturen Flüssigkeiten darstellen.

Typische Beispiele derartiger Verbindungen sind :

1. Veresterungsprodukte von (Meth)Acrylsäure bzw. Umsetzungsprodukte von (Meth)Acrylsäureestern bzw. Umsetzungsprodukte von (Meth)Acrylsäurehalogeniden mit

a) aliphatischen gesättigten 2-6wertigen Alkoholen, insbesondere 2-4wertigen Alkoholen des Molekulargewichtsbereichs 62 bis 4 000 wie z. B. Ethylenglykol, Propandiol-1,3, Neopentylglykol, Butandiol-1,4, Hexandiol-1,6, Dekandiol-1,10, Glycerin, Trimethylolpropan, Pentaerythrit, Dipentaerythrit sowie die Oxalkylierungsprodukte der 2-6wertigen Alkohole mit 1,2-Alkylenoxiden wie Ethylenoxid oder Propylenoxid oder deren Mischungen, oder mit

b) cycloaliphatischen Diolen des Molekulargewichtsbereichs 114 bis 400 wie Cyclohexandiol-1,4 und 4,4'-Dihydroxycyclohexyl-2,2-alkane, wie 4,4'-Dihydroxycyclohexyl-2,2-propan oder mit

c) araliphatischen 2-wertigen Alkoholen, die gegebenenfalls 1-4 Ethersauerstoffatome enthalten des Molekulargewichtsbereichs 316-600, wie bis (oxethyliertes) Bisphenol A sowie bis(oxpropyliertes) Bisphenol A oder mit

d) gesättigten oder ungesättigten, vorzugsweise gesättigten Polyestern des OH-Zahl-Bereichs 20 bis 300, vorzugsweise 20 bis 150 mit mindestens zwei freien Hydroxylgruppen aus den unter a), b) und c) genannten Alkoholen und mindestens einer Polycarbonsäure oder deren Anhydriden, insbesondere Dicarbonsäuren wie Maleinsäure, Fumarsäure, Mesaconsäure, Citraconsäure, Itaconsäure, Bernsteinsäure, Glutarsäure, Adipinsäure, Sebacinsäure, Phthalsäure, Isophthalsäure, Terephthalsäure, Trimellitsäure, Hexahydrophthalsäure, Tetrahydrophthalsäure, Endomethylentetrahydrophthalsäure, Methylhexahydrophthalsäuren,
wobei pro Mol an Hydroxylgruppen der Komponenten a) bis d) im allgemeinen 0,3 bis 0,75 Mol der (Meth)Acryloylverbindung eingesetzt werden.

Bei der Verwendung von olefinische Doppelbindungen aufweisenden Alkoholen, insbesondere bei der Verwendung von ungesättigten Polyesterpolyolen bleibt der Gehalt an olefinischen Gruppen dieser Aufbaukomponenten bei der Berechnung des Doppelbindungsgehalts der erfindungswesentlichen Komponente B) unberücksichtigt.

Weitere Beispiele geeigneter Komponenten B) sind

2. Umsetzungsprodukte aus mehrwertigen Alkoholen der oben beispielhaft genannten Art mit Polyisocyanaten der oben beispielhaft genannten Art und sowohl, vorzugsweise alkoholische, Hydroxylgruppen als auch (Meth)Acryloylgruppen aufweisenden Verbindungen wie z. B. 2-Hydroxyethyl-, 2-Hydroxy-propyl-, 2-Hydroxybutyl-, 3-Hydroxypropyl-, 4-Hydroxybutyl- oder 6-Hydroxyhexylacrylat, oder -methacrylat, bevorzugt 2-Hydroxyethylacrylat, 2-Hydroxypropylacrylat oder 4-Hydroxybutylacrylat.

Bei der Herstellung derartiger Verbindungen gelangen die genannten Aufbaukomponenten im allgemeinen in solchen Mengen zum Einsatz, daß auf jedes Mol an Hydroxylgruppen der mehrwertigen Alkohole 0,5 bis 1,5 Mol Isocyanatgruppen des Polyisocyanats und 0,35 bis 0,75 Mol Hydroxylgruppen der (Meth)Acryloylgruppen aufweisenden Verbindungen entfallen, so daß als Reaktionsprodukte der obengenannten Definition entsprechende Hydroxylgruppen und (Meth)Acroylgruppen, sowie (im vorliegenden Fall) Urethangruppen aufweisende Verbindungen erhalten werden.

Weitere für das erfindungsgemäße Verfahren geeignete Komponenten B) sind

3. Umsetzungsprodukte aus Polyepoxiden und (Meth)acrylsäure, bei deren Herstellung pro Mol an Epoxidgruppen d. h. pro Epoxidäquivalent 0,8-1,1, vorzugsweise 0,9-1 Mol (Meth)Acrylsäure eingesetzt wird. Unter Polyepoxiden werden in diesem Zusammenhang Verbindungen verstanden, die (im statistischen Mittel) mehr als eine 1,2-Epoxidgruppe pro Molekül, vorzugsweise 1,6 bis 6, insbesondere 1,6 bis 3 Epoxidgruppen enthalten.

Die Polyepoxidverbindungen können z. B. Polyglycidylether mehrwertiger Phenole sein, beispielsweise solche von Brenzkatechin, Resorcin, Hydrochinon, 4,4'-Dihydroxydiphenylmethan, 4,4'-Dihydroxy-3,3'-dimethyldiphenylmethan, 4,4'-Dihydroxydiphenyldimethylmethan (Bisphenol A) 4,4'-Dihydroxydiphenylmethylmethan, 4,4'-Dihydroxydiphenylcyclohexan, 4,4'-Dihydroxydiphenyl, 4,4'-Dihydroxydiphenylsulfon, Tris-(4-hydroxyphenyl)-methan, den Chlorierungs- und Bromierungsprodukten der genannten Diphenole, insbesondere solche von Bisphenol A, Novolaken (d. h. aus Umsetzungsprodukten von ein- oder mehrwertigen Phenolen mit Aldehyden, insbesondere Formaldehyd, in Gegenwart saurer Katalysatoren), von Diphenolen, die durch Veresterung von 2 Mol des Natriumsalzes einer aromatischen Oxycarbonsäure mit einem Mol eines Dihalogenalkans oder Dihalogendialkylethers erhalten wurden (vgl. britische Patentschrift 1 017 612) oder von Polyphenolen, die durch Kondensation von Phenolen und Langkettigen, mindestens 2 Halogenatome enthaltenden Halogenparaffinen erhalten wurden (vgl. GB-OS 1 024 288).

Weiter seien genannt Glycidylether mehrwertiger Alkohole, beispielsweise aus 1,4-Butandiol, 1,4-Butendiol, Glycerin, Trimethylolpropan, Pentaerythrit und Polyethylenglykolen. Von weiterem Interesse sind Triglycidylisocyanurat, N,N'-Diepoxypropyloxamid.

Außerdem kommen in Frage: Glycidylester mehrwertiger aromatischer, aliphatischer und cycloaliphatischer Carbonsäuren, beispielsweise Phthalsäure-diglycidylester, Isophthalsäure-diglycidylester, Terephthylsäure-diglycidylester, Tetrahydrophthalsäure-diglycidylester, Adipinsäure-diglycidylester, Hexahydrophthalsäure-diglycidylester, die gegebenenfalls durch Methylgruppen substituiert sein können und Glycidylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxylgruppen, etwa Glycidylcarbonsäureester der allgemeinen Formel

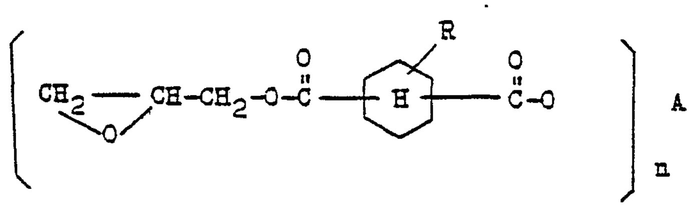

worin A einen mindestens 2-wertigen Rest eines gegebenenfalls durch Sauerstoff und/oder cycloaliphatische Ringe unterbrochenen aliphatischen Kohlenwasserstoffs oder den 2-wertigen Rest eines cycloaliphatischen Kohlenwasserstoffs, R Wasserstoff oder Alkylreste mit 1-3 C-Atomen und n eine Zahl zwischen 2-6 bedeuten, oder Mischungen von Glycidylcarbonsäureestern der angegebenen allgemeinen Formel (vgl. GB-PS 1 220 702).

Bevorzugte Polyepoxidverbindungen sind Polyglycidylether mehrwertiger Phenole, insbesondere aus Bisphenol A, Phthalsäureglycidylester, Isophthalsäurediglycidylester, Terephthalsäure-diglycidylester, Polyglycidylester aus cycloaliphatischen Dicarbonsäuren, insbesondere Hexahydrophthalsäurediglycidylester und Polyepoxide aus dem Umsetzungsprodukt von n Molen Hexahydrophthalsäureanhydrid und/oder Phthalsäureanhydrid und 1 Mol eines Polyols mit n Hydroxylgruppen (n = ganze Zahl von 2-6), insbesondere von 3 Mol Hexahydrophthalsäure-anhydrid und/oder Phthalsäureanhydrid und einem Mol 1,1,1-Trimethylolpropan.

Die genannten Polyepoxide können auch durch Umsetzung mit aliphatischen oder aromatischen Dicarbonsäuren, mit Dimercaptanen oder $H_2S$ oder mit Aminen oder Ammoniak vorverlängert sein, wenn ein höheres Molekulargewicht dieser Ausgangskomponente erwünscht ist.

Die Herstellung der oben unter 1) aufgeführten Verbindungen kann durch Veresterung der unter a), b), c) oder d) aufgeführten Polyole mit (Meth)Acrylsäure, vorzugsweise unter säurekatalysierten azeotropen Bedingungen, durch Umesterung der Polyole mit geeigneten (Meth)Acrylsäureestern, vorzugsweise unter Verwendung eines Umesterungs-katalysators, oder durch Umsetzung eines (Meth)Acrylsäurehalogenids mit den Polyolen, vorzugsweise in Gegenwart eines basischen Hilfsmittels wie z. B. tert. Aminen nach den üblichen Methoden der organischen Chemie erfolgen.

Die Herstellung der unter 1) aufgeführten (meth)acryloylgruppenhaltigen Oligoalkohole, die sich formal von den Polyesterpolyolen gemäß d) ableiten, kann ferner in einem Eintopfverfahren durch Umsetzung von (Meth)acrylsäure, der zum Aufbau des Polyesterpolyols notwendigen Alkoholen und Carbonsäuren unter säurekatalysierten azeotropen Bedingungen erfolgen.

Vorzugsweise werden die unter 1) aufgeführten (meth)-acryloylgruppenhaltigen Oligoalkohole durch säurekatalysierte Veresterung in Gegenwart eines Schleppmittels und den üblichen Polymerisationsinhibitoren in an sich bekannter Weise hergestellt.

Als Veresterungskatalysatoren dienen handelsübliche organische und anorganische Säuren oder saure Ionenaustauscher. Besonders bevorzugt wird p-Toluolsulfonsäure in Mengen von 0,1 bis 3 Gew.-%, bezogen auf die Summe der Gewichtsmengen von (Meth)Acrylsäuren und Polyolen eingesetzt. Als Schleppmittel zur Entfernung des Reaktionswassers sind geeignet aliphatische oder cycloaliphatische oder aromatische Kohlenwasserstoffe sowie deren Chlorierungsprodukte oder Gemische derselben, insbesondere solche mit einem Siedebereich zwischen 40 °C und 140 °C, vorzugsweise 70 °C bis 120 °C. Bevorzugte Kohlenwasserstoffe sind beispielsweise Hexan und seine Isomeren, Cyclohexan und insbesondere Toluol. Die Mengen an Schleppmittel kann 10-60 Gew.-%, bezogen auf die Summe der Gewichtsmengen von (Meth)Acrylsäure und Polyol betragen.

Im allgemeinen wird man die Menge des Schleppmittels so bemessen, daß eine azeotrope Entwässerung gewährleistet ist und die Sumpftemperatur des Reaktionsgemisches eine Temperatur von 120-140 °C nicht überschreitet.

Ein typisches Herstellungsbeispiel der beispielhaft unter 1) aufgeführten Komponenten B) sieht wie folgt aus. Ein Grammäquivalent eines Polyols der unter a), b), c) oder d) beispielhaft genannten Art wird zusammen mit 0,3-0,75 Grammäquivalenten (Meth)Acrylsäure, den Polymerisationsinhibitoren, den Veresterungskatalysatoren und den Schleppmitteln vorgelegt und unter Durchleiten eines leichten Luftstromes zügig entwässert. Der Fortgang der Reaktion läßt sich leicht durch Titration des Säuregehaltes des Gemisches verfolgen. Die Reaktion wird beendet, wenn eine Säurezahl (mg KOH/g Substanz) kleiner 5 erreicht ist. Nach Abdestillieren des Schleppmittels resultiert eine erfindungsgemäß geeignete Komponente B) als flüssige, schwach gelb gefärbte Substanz.

Die Herstellung der unter 2) beispielhaft aufgeführten, erfindungsgemäß geeigneten Komponenten B), die in der aliphatischen Kette Oxycarbonylaminogruppen enthalten, kann durch Umsetzung von sowohl hydroxyl- als auch (meth)acryloylhaltigen Verbindung wie z. B. die unter 1) aufgeführten oder durch Umsetzung von Hydroxyalkyl (meth)acrylaten mit Polyisocyanaten und Polyalkoholen gemäß a), b), c) oder d) erfolgen, wobei pro Grammäquivalent OH des Polyols 0,5-1,5 Grammäquivalent NCO des Polyisocyanates und 0,25-0,75 Grammäquivalente OH des ethylenisch ungesättigten Alkohols bevorzugt sind.

Als Polyolkomponenten werden hierbei difunktionelle Polyesterpolyole der unter c) beispielhaft genannten Art mit einen OH-Zahlenbereich (mg KOH/g Substanz) von 20-150 besonders bevorzugt.

Als Polyisocyanatkomponente werden besonders difunktionelle Polyisocyanate wie z. B. 2,4- und/oder 2,6-Toluylendiisocyanat, 2,4- und/oder 4,4'-Diisocyanatodiphenylmethan, 4,4'-Diisocyanatodicyclohexylmethan, Isophorondiisocyanat oder Hexamethylendiisocyanat bevorzugt.

Die Umsetzung des Polyisocyanates mit ethylenisch ungesättigten Alkoholen und den Polyolen zu (meth)acryloylgruppenhaltigen Oligoalkoholen kann z. B. bei Temperaturen von 20-90 °C, vorzugsweise bei 40-70 °C, in einem Eintopfverfahren oder in mehreren Stufen durchgeführt werden. Bei einem mehrstufigen Verfahren ist die Umsetzung des Polyisocyanates mit dem ethylenisch ungesättigten Alkohol in der ersten Stufe, gefolgt von der Addition des Polyols in der zweiten Stufe bevorzugt.

Die Urethanbildungsreaktion kann in an sich bekannter Weise, z. B. mit Zinnoctoat, Dibenzylzinndilaurat, Caprolactam oder tertiären Aminen katalysiert werden. Ebenso können die Urethangruppen aufweisenden erfindungsgemäßen (meth)acryloylhaltigen Oligoalkohole durch Zugabe geeigneter Inhibitoren und Antioxidantien, je 0,001-0,1 Gew.-% bezogen auf die Gesamtmischung, vor vorzeitiger und unerwünschter Polymerisation geschützt werden.

Die Herstellung der unter 3) aufgeführten erfindungsgemäß geeigneten Komponenten B) kann durch Umsetzung eines Grammäquivalentes Epoxid eines Polyepoxid mit 0,8-1,1 vorzugsweise 0,9-1 Mol (Meth)Acrylsäure erfolgen, wobei Umsetzungsprodukte mit Acrylsäure bevorzugt sind.

Die Anlagerung der Acryl- und/oder Methacrylsäure an die Polyepoxide erfolgt hierbei nach bekannten Methoden, beispielsweise nach den Verfahren der US-PS 3 301 743 oder US-PS 2 324 851 in Substanz oder in Lösungsmitteln, wie z. B. Butylacetat, Ethylacetat, Aceton, Ethylmethylketon, Diethylketon, Cyclohexan, Cyclohexanon, Cyclopentan, Cyclopentanon, n-Heptan, n-Hexan, n-Octan, Isooctan, Methylenchlorid, Chloroform, 1,1-Dichlorethan, 1,2-Dichlorethan, 1,1,2-Trichlorethan, Tetrachlorkohlenstoff. Falls gewünscht, kann die Anlagerung der (Meth)Acrylsäure in Gegenwart von etwa 0,01-3 Gew.-%, bezogen auf Ausgangsepoxid an Katalysatoren, wie tert. Amine, Alkalihydroxide, Alkalisalze organischer Carbonsäuren, Bis-(hydroxyalkyl)-sulfide, Sulfonium-, Phosphoniumverbindungen, Phosphine, Amine oder Stibine durchgeführt werden. Als zweckmäßig haben sich Umsetzungstemperaturen von 40 bis 90 °C erwiesen, die jedoch in speziellen Fällen nach oben oder unten überschritten werden können. Um die resultierenden Reaktionsprodukte vor unerwünschter vorzeitiger Polymerisation zu bewahren, empfiehlt es sich, bereits bei der Herstellung 0,001-0,1 Gew.-%, bezogen auf die Gesamtmischung, Polymerisationsinhibitoren zuzusetzen.

Die als erfindungsgemäße Komponente B) geeigneten, nach beispielsweise einem der oben skizzierten Verfahren hergestellten Verbindungen enthalten im allgemeinen von der praxisüblichen Herstellung her genügend Polymerisationsinhibitoren, die sie vor vorzeitiger Polymerisation schützen. In den Fällen, wo die inhibierende Wirkung der bei der Herstellung angewandten Polymerisationsinhibitoren unzureichend ist, kann eine Nachstabilisierung mit den üblichen Inhibitoren ohne weiteres vorgenommen werden.

Geeignete Hilfsmittel dieser Art sind beispielsweise Phenole und Phenolderivate, vorzugsweise sterisch gehinderte Phenole, die in beiden o-Stellungen zur phenolischen Hydroxygruppe Alkylsubstituenten mit 1-6 C-Atomen enthalten, Amine, vorzugsweise sekundäre Acrylamine und ihre Derivate, Chinone, Kupfer-I-Salze organischer Säuren oder Anlagerungsverbindungen von Kupfer (I) halogeniden an Phosphite.

Namentlich seien genannt:

4,4'-Bis-(2,6-di-tert.-butylphenol), 1,3,5-Trimethyl-2,4,6-tris-(3,5-di-tert.-butyl-4-hydroxy-benzyl)-benzol, 4,4'-Butyliden-bis-(tert.-butyl-m-kresol), 3,5-Di-tert.-butyl-4-hydroxybenzyl-phosphonsäurediethylester, N,N-Bis-(β-naphthyl)-p-phenylendiamin, N,N'-Bis-(1-methyl-heptyl)-p-phenylendiamin, Phenyl-β-naphthylamin, 4,4'-Bis-(α,α-dimethylbenzyl)-diphenylamin, 1,3,5-Tris-(3,5-di-tert.-butyl-4-hydroxy-hydrocinnamoyl)-hexahydro-s-triazin, Hydrochinon, p-Benzochinon, 2,5-Di-tert.-butylhydrochinon, Toluhydrochinon, p-tert.-Butyl-brenzcatechin, 3-Methylbrenzcatechin, 4-Ethylbrenzcatechin, Chloranil, Naphthochinon, Kupfernaphthenat, Kupferoctoat, Cu(I)Cl/Triphenylphosphit, Cu(I)Cl/Trimethylphosphit, Cu(I)Cl, Trichlorethylphosphit, Cu(I)Cl/Tripropylphosphit, p-Nitrosodimethylanilin.

Weitere geeignete Stabilisatoren sind in « Methoden der Organischen Chemie » (Houben-Weyl), 4. Auflage, Band XIV/I, S. 433-452, 756, Georg Thieme Verlag, Stuttgart 1961, beschrieben. Sehr gut geeignet ist z. B. 2,5-Di-tert.-butylhydrochinon und/oder Hydrochinonmonomethylether in einer Konzentration von 0,001 bis 0,05 Gew.-%, bezogen auf die Menge der Komponente B).

Zur Herstellung der erfindungsgemäßen Klebstoffe wird die Komponente A) mit der Komponente B) vermischt, wobei die Mengenverhältnisse der einzelnen Komponenten so gewählt werden, daß für jedes Mol an Hydroxylgruppen der Komponente B) 0,8 bis 1,3, vorzugsweise 1,0 bis 1,2 Mol Isocyanatgruppen der Komponente A) zur Verfügung stehen. Im übrigen hängt das Mengenverhältnis von der Art der zu verklebenden Folien und den Verarbeitungsbedingungen ab. Das am besten geeignete Mischungsverhältnis läßt sich leicht sowohl qualitativ als auch quantitativ durch einfache Handversuche ermitteln.

Das Mischen der Komponenten A) und B) zur strahlenhärtbaren Klebstoffmasse kann mit den in der Praxis üblichen Methoden wie z. B. Verrühren, Verkneten, Schütteln oder Anreiben erfolgen.

Die aus den Komponenten A) und B), gegebenenfalls unter Hinzufügen eines Photoinitiators, bestehende erfindungsgemäße strahlenhärtbare Klebstoffmasse weist im allgemeinen eine niedrige Viskosität auf. In den Fällen, wo die Verarbeitung der Klebmasse aufgrund ihrer Viskosität mit den üblichen Auftragswerken nicht zum Erfolg führt, können sowohl die Komponenten A) und B) getrennt als auch die durch Mischen von Komponente A) und B) zugängliche Formulierung zur Applikation auf Temperaturen bis 120 °C, vorzugsweise auf 30-70 °C erwärmt werden.

Weiterhin ist es zur Reduzierung der Viskosität möglich und bei Verwendung von urethangruppenhaltigen ethylenisch ungesättigten Verbindungen als Komponente B) bevorzugt, die Klebmasse mit copolymerisierbaren Monomeren abzumischen. Die Zugaben der copolymerisierbaren Monomeren kann sowohl zur Komponente A als auch zur Komponente B sowie zur Mischung aus Komponente A) und B) erfolgen. Bevorzugt wird die Abmischung der copolymerisierbaren Monomeren mit der Komponente B).

Zur Abmischung geeignete copolymerisierbare Monomere sind :

1. Ester der Acryl- oder Methacrylsäure mit aliphatischen $C_1$-$C_8$, cycloaliphatischen $C_5$-$C_6$, araliphatischen $C_7$-$C_8$ Monoalkoholen, beispielsweise Methylacrylat, Ethylacrylat, n-Propylacrylat, n-Butylacrylat, Methylhexylacrylat, 2-Ethylhexylacrylat und die entsprechenden Methacrylsäureester, Cyclopentylacrylat, Cyclohexylacrylat, 5-Ethyl-5-methylolacryloyl-dioxan-1,3, Benzylacrylat, β-Phenylethylacrylat oder die entsprechenden Methacrylsäureester ;

2. Di- und Polyacrylate sowie Di- und Polymethacrylate von Glykolen mit 2 bis 6 C-Atomen und Polyolen mit 3-4 Hydroxylgruppen und 3 bis 6 C-Atomen, wie Ethylenglykoldiacrylat, Propandiol-1,3-diacrylat, Butandiol-1,4-diacrylat, Hexandiol-1,6-diacrylat, Trimethylolpropan-triacrylat, Pentaerythrit-tri- und -tetraacrylat sowie entsprechende Methacrylate, ferner Di(meth)acrylate von Polyetherglykolen des Glykols, Propandiol-1,3, Butandiol-1,4, tetraoxethyliertes Trimethylolpropan-trisacrylat ;

3. Aromatische Vinyl- und Divinylverbindungen, wie Styrol, Methylstyrol, Divinylbenzol ;

4. N-Methylolacrylamid oder N-Methylolmethacrylamid sowie entsprechende N-Methylolalkylether mit 1-4 C-Atomen in der Alkylethergruppe bzw. entsprechende N-Methylolallylether, insbesondere N-Methoxymethyl (meth)acrylamid, N-Butoxymethyl (meth)acrylamid und N-Allyloxymethyl (meth)acrylamid ;

5. Vinylalkylether mit 1-4 C-Atomen in der Alkylgruppe, wie Vinylmethylether, Vinylethylether, Vinylpropylether, Vinylbutylether ;

6. Trimethylolpropan-diallylethermono (meth)acrylat, Vinylpyridin, N-Vinylcarbazol, Triallylphosphat, Triallylisocyanurat und andere.

Besonders bevorzugt werden copolymerisierbare Monomere der Gruppe I, insbesondere 5-Ethyl-5-methylolacryloyldioxan-1,3.

Es können auch Gemische aus einem oder mehreren der vorgenannten Monomeren eingesetzt werden. Die Zusätze können etwa 0-70 Gew.-%, vorzugsweise 0-40 Gew.-%, betragen, bezogen auf die Mischung aus Komponente A) und B).

Falls gewünscht, ist es möglich, die erfindungsgemäße 2-Komponenten-Klebmasse mit inerten Lösungsmitteln wie Butylactat, Ethylacetat, Aceton, Ethylmethylketon, Diethylketon, Cyclohexan, Cyclohexanon, Cyclopentan, Cyclopentanon, n-Heptan, n-Hexan, n-Octan, Isooctan, Toluol, Xylol, Methylenchlorid, Chloroform, 1,1-Dichlorethan, 1,2-Dichlorethan, 1,1,2-Trichlorethan, Tetrachlorkohlenstoff abzumischen.

Die Zusätze können etwa 0-50 Gew.-%, vorzugsweise 0-40 Gew.-%, bezogen auf Mischung aus Komponenten A) und B). Vorzugsweise werden beim erfindungsgemäßen Verfahren jedoch lösungsmittelfreie Klebstoffe eingesetzt.

Natürlich ist es auch möglich, Mischungen aus zusätzlichen Monomeren und Lösungsmitteln innerhalb der angegebenen Mengenverhältnisse einzusetzen.

Die Applikation der fertig formulierten 2-Komponenten-Klebstoffmasse kann mit den in der Praxis üblichen Geräten bzw. Verfahren erfolgen, wie z. B. mit Rasterwalzen, Dosierwalzen, Rakel, Verreibetechnik, gegebenenfalls in Verbindung mit Klebstoffverstreckung.

Die erfindungsgemäßen Klebstoffe weisen im allgemeinen eine Topfzeit von bis zu 12 Stunden auf. Sie müssen innerhalb dieses Zeitraums nach dem Vermischen der Einzelkomponenten verarbeitet werden.

Das erfindungsgemäße Verfahren eignet sich zum Verkleben von Folien mit sich selbst oder anderen Substraten. Unter « anderen Substraten » sind hierbei beliebige flexible oder nicht-flexible Substrate, wie beispielsweise Papier, Kartonage, Kunststoffe, fotografische Papiere insbesondere jedoch Folien gleicher oder unterschiedlicher chemischer Zusammensetzung wie die erste Folie zu verstehen. Das erfindungsgemäße Verfahren eignet sich somit besonders bevorzugt zur Herstellung von Verbundfolien.

Als Folienmaterial eignen sich z. B. Polyolefine wie Polyethylen, Celluloseester, Polyvinylacetat, Polystyrol, Polycarbonat, insbesondere auf Basis von Bisphenol A, Polyester, insbesondere auf Basis von Polyethylen- und Polybutylenterephthalat, PVC, Polyamid, z. B. Polyamid-6 oder Polyamid-66, Aluminium.

Selbstverständlich kann als « anderes Substrat » auch eine bereits vorab, beispielsweise nach dem erfindungsgemäßen Verfahren hergestellte Verbundfolie verwendet werden, so daß beim erfindungsgemäßen Verfahren Folienverbunde erhalten werden, die drei oder mehr Einzelfolien im Verbund enthalten. Beispiele geeigneter Verbundfolien, die bei der Durchführung des erfindungsgemäßen Verfahrens als « Substrat » zur Verklebung mit einer weiteren Folie eingesetzt werden können sind Polyethylen/Polyamide, Polypropylen/Polyamide oder Polyolefinfolien mit anderen Folienmaterialien wie Polyestern, z. B. Polyethylenterephthalat.

Geeignete Folien und Verbundfolien werden in Ullmanns Encyclopädie der technischen Chemie, 4. Auflage, II. Band, Seiten 673 ff. beschrieben.

Die Dicke der verwendeten Folien richtet sich nach der gewünschten Steifigkeit der Verbundfolie. Im allgemeinen werden Gesamtdicken zwischen 10 und 250 µm ausreichen.

Die zur Aufnahme der strahlenhärtbaren 2-Komponenten-Klebmasse bestimmte Oberfläche der Folie kann vor der Beschichtung zur Verbesserung der Bindung zwischen Folie und strahlenhärtbarer 2-Komponenten-Klebmasse einer Vorbehandlung unterworfen werden, die einen gleichmäßigen Auftrag der 2-Komponenten-Klebmasse gewährleistet und deren Haftfestigkeit erhöht. Gute Ergebnisse erhält man z. B. bei Polyolefinen mit einer üblichen Coronabehandlung.

Es ist selbstverständlich auch möglich, die Haftung der strahlenhärtbaren Masse auf der Trägerfolie durch andere Maßnahmen zu unterstützen, so z. B. durch Aufbringen einer geeigneten Substrierschicht.

Die Stärke der 2-Komponenten-Klebmasse richtet sich nach den Anforderungen und der Haftungsfähigkeit der strahlenhärtbaren Klebstoffmasse. Sie beträgt 0,5-5 µm, im allgemeinen wird man mit 1-3 µm, auskommen. Im allgemeinen ist es ausreichend, die mit sich selbst oder dem andersartigen Substrat zu verklebende Folie allein mit dem erfindungswesentlichen Klebstoff zu beschichten. Grundsätzlich ist es jedoch auch möglich beide miteinander zu verklebende Oberflächen oder lediglich die mit der Folie zu verklebende Oberfläche des Substrats mit dem erfindungsgemäßen Klebstoff zu beschichten.

Die Härtung der erfindungsgemäßen, 2-Komponenten-Klebmasse, gegebenenfalls in Mischung mit anderen copolymerisierbaren Monomeren kann mittels energiereicher Strahlung wie UV-Licht, Elektronen-, Gammastrahlen oder in Gegenwart von Radikale liefernden Substanzen, wie thermische Polymerisationsinitiatoren erfolgen. Vorzugsweise erfolgt die Härtung des Klebstoffs mittels der genannten energiereichen Strahlung.

Besonders bevorzugt werden die erfindungsgemäßen Klebstoffe durch den Einfluß von UV-Licht gehärtet. Für diese Anwendung ist der Zusatz von Photoinitiatoren erforderlich.

Als Photoinitiatoren sind die üblicherweise für diesen Zweck verwendeten Verbindungen geeignet, beispielsweise Benzophenon sowie ganz allgemein aromatische Ketonverbindungen, die sich vom Benzophenon ableiten, wie Alkylbenzophenone, halogenmethylierte Benzophenone gemäß der Deutschen Offenlegungsschrift 1 949 010, Michlers Keton, Anthron, halogenierte Benzophenone. Ferner eignen sich Benzoin und seine Derivate, etwa gemäß den Deutschen Offenlegungsschriften 1 769 168, 1 769 853, 1 769 854, 1 807 297, 1 807 301, 1 919 678 und der Deutschen Auslegeschrift 1 694 149. Ebenfalls wirksame Photoinitiatoren stellen Anthrachinon und zahlreiche seiner Derivate dar, beispielsweise β-Methylanthrachinon, tert. Butylanthrachinon und Anthrachinon-carbonsäureester, ebenso Oximester gemäß der Deutschen Offenlegungsschrift 1 795 089. Weiter geeignet sind Phenylglyoxylsäureester gemäß DE-OS 2 825 955.

Besonders geeignete Photoinitiatoren sind Benzildimethylketal, Benzoinether, Phenylglyoxylsäureester gemäß DT-OS 2 825 955 und das System Benzophenon/Amin entsprechend der US-PS 3 759 807.

Die für das jeweilige photovernetzbare System am besten geeigneten Photoinitiatoren können durch wenige einfache Handversuche ermittelt werden.

Die Bestrahlung kann je nach der Natur und der Reaktivität der strahlenhärtbaren 2-Komponenten-Klebmasse zu verschiedenen Zeitpunkten, im allgemeinen nach dem Zusammenführen der zu verklebenden Folie mit sich selbst oder dem Substrat durchgeführt werden. Im Einzelfall kann es vorteilhaft sein, vor oder während der Kaschierung der Folien zur Vernetzung zu bestrahlen. Bei einer Bestrahlung der erfindungsgemäß zu verwendenden Klebstoffe vor dem Zusammenführen der zu verklebenden Flächen werden die flüssigen Klebstoffe durch die, durch die Bestrahlung hervorgerufene, Polymerisationsreaktion in stark klebrige, noch Isocyanat- und Hydroxylgruppen aufweisende Schichten überführt.

Für die Bestrahlung des mit der erfindungsgemäßen 2-Komponenten-Klebmasse versehenen Verbundfolie eignen sich insbesondere die in der Reproduktionstechnik gebräuchlichen Lichtquellen, deren Emission im allgemeinen im Bereich von 25 bis 50 pm, vorzugsweise 30 bis 40 pm liegt. Beispiele für geeignete Lichtquellen sind Kohlenbogenlampen, Xenonlampen, UV-Fluoreszenslampen, Quecksilberniederdrucklampen, Quecksilberhochdrucklampen, die neben sichtbarem Licht einen für die Polymerisation besonders wirksamen Anteil an ultravoilettem Licht liefern.

Die Belichtungszeit richtet sich nach der Art der verwendeten Lichtquelle. Die Bestrahlung kann bei Raumtemperatur erfolgen, die kann aber auch bei erhöhten Temperaturen durchgeführt werden.

Die erfindungsgemäßen strahlenhärtbaren, vorzugsweise lösungsmittelfreien 2-Komponenten-Klebmassen zeichnen sich durch ihre sehr guten Anfangshaftungen aus. Die Endhaftungen werden nach wenigen Stunden bis Tagen erreicht. Durch die Bestrahlung werden die erfindungsgemäß zu verwendenden Komponenten B) in Hydroxylgruppen aufweisende Polymere überführt. Die Endhaftungen werden nach der, im wesentlichen nach der Polymerisationsreaktion ablaufenden Isocyanat-Additionsreaktion erhalten.

In den folgenden Beispielen seien zur Veranschaulichung der Erfindung einige typische Ausführungsformen dargelegt.

Die Viskositäten wurden entweder im 4-mm-Auslaufbecher nach DIN 53 211 (Angabe in Sekunden) oder mit einem Vicotester der Firma Haake, Typ VI 02V (Angabe in Pa.s, Meßbereich bis 400 Pa.s) bestimmt.

Als Belichtungsquelle wurden Quecksilberhochdruckstrahler der Firma Philips (HPK, Leistungsaufnahme 125 W) oder Quecksilberhochdruckstrahler der Firma Hanovia (Leistungsaufnahme 80 W/cm) benutzt.

Die in den Beispielen angegebenen Prozentzahlen und Teile beziehen sich auf das Gewicht, sofern nicht anders vermerkt. Die in den Tabellen 1, 3, 5, 7 und 10 angegebenen Zahlenwerte beziehen sich auf Gewichtsteile.

In den nachfolgenden Beispielen werden die wie nachstehend beschrieben hergestellten, Acryloylgruppen und Hydroxylgruppen aufweisenden Verbindungen (« Oligoalkohole ») eingesetzt.

### Oligoalkohol I

In einem 4-l-Kolben, ausgerüstet mit Rührer, Tropftrichter, Gaseinleitungsrohr und Thermometer werden 174 g Toluylendiisocyanat, 0,17 g Zinn-II-octoat und 0,17 g 2,5-Di-tert.-butylhydrochinon vorgelegt und auf 60 °C erwärmt. Anschließend werden unter Überleiten eines geringen Luftstromes innerhalb von 0,5 Stunden 116 g Hydroxyethylacrylat so zugetropft, daß die Innentemperatur 65 °C nicht überschreitet. Nach Erreichen eines NCO-Wertes von 14,1 Gew.-% werden 2 000 g eines Polyesterdiols der OH-Zahl 56 auf Basis von Adipinsäure, Ethylenglykol, Diethylenglykol und Butandiol-1,4 zugegeben und der Ansatz bei 65 °C solange gerührt, bis der NCO-Wert kleiner 0,1 Gew.-% beträgt. Man erhält einen hellgelben Oligoalkohol mit einer OH-Zahl von 31 und einem Gehalt an 0,044 olefinischen Doppelbindungen pro 100 Molekulargewichtsheinheiten.

Oligoalkohol II

In einem 4-l-Kolben, ausgerüstet mit Rührer, Tropftrichter, Gaseinleitungsrohr und Thermometer werden 348 g Toluylendiisocyanat, 0,35 g Zinn-II-octoat und 0,35 g Di-tert.-butylhydrochinon vorgelegt und auf 60 °C erwärmt. Anschließend werden innerhalb von 1 Stunde 232 g Hydroxyethylacrylat so zugetropft, daß die Innentemperatur von 65 °C nicht überschritten wird.

Nach Erreichen eines NCO-Wertes von 14,1 Gew.-% werden 3 000 g propoxyliertes Trimethylolpropan der OH-Zahl 56 zugegeben und der Ansatz so lange bei 65 °C gerührt, bis der NCO-Wert kleiner 0,1 Gew.-% beträgt. Man erhält einen hellgelben Oligoalkohol mit einer OH-Zahl von 20 und einem Gehalt an 0,056 olefinischen Doppelbindungen pro 100 Molekulargewichtseinheiten.

Oligoalkohol III

In einem 2-l-Kolben, ausgerüstet mit Rührer, Tropftrichter, Gaseinleitungsrohr und Thermometer werden 380 g Bisphenol-A-diepoxid (epoxyäquivalent 190), 0,35 g p-Methoxyphenol und 3,7 g Thiodiglykol vorgelegt und auf 70 °C erwärmt. Unter Überleiten eines geringen Luftstromes werden 144 g Acrylsäure innerhalb von 2 Stunden zugetropft. Anschließend wird bei 75-85 °C so lange gerührt, bis die Säurezahl kleiner 5 ist. Man erhält einen hellgelben ethylenisch ungesättigten Oligoalkohol mit einer OH-Zahl von 212 und einem Gehalt von 0,38 olefinischen Doppelbindungen pro 100 Molekulargewichtseinheiten.

Oligoalkohol IV

In einem 3-l-Kolben, ausgerüstet mit Gaseinleitungsrohr, Rührer, Wasserabscheider und Thermometer werden 672 g ethoxyliertes Trimethylolpropan (OH-Zahl 250), 144 g Acrylsäure, 6,5 g p-Toluolsulfonsäure, 0,65 g Di-tert.-butyl-hydrochinon, 0,41 g p-Methoxyphenol und 180 g Toluol vorgelegt und unter Durchleiten eines geringen Luftstromes zügig im Umlauf entwässert. Nach Erreichen einer Säurezahl von kleiner 5 wird das Toluol im Vakuum abdestilliert und der Rückstand 1 Stunde unter Durchleiten von Luft bei 90-100 °C und 50 mbar desorbiert. Man erhält einen ethylenisch ungesättigten Oligoalkohol als niedrigviskose Flüssigkeit mit einer OH-Zahl von 93 und einem Gehalt von 0,25 olefinischen Doppelbindungen pro 100 Molekulargewichtseinheiten.

Oligoalkohol V

Entsprechend der Herstellungsvorschrift für Oligoalkohol IV, jedoch unter Verwendung von 965,5 g eines propoxylierten und endständig ethoxylierten Trimethylolpropan der OH-Zahl von 174 wird ein Oligoalkohol mit einer OH-Zahl von 62 und einem Gehalt von 0,18 olefinischen Doppelbindungen pro 100 Molekulargewichtseinheiten erhalten.

In den nachfolgenden Beispielen werden folgede ungesättigte Photoinitiatoren verwendet :

Photoinitiator I

In einem 2-l-Dreihalskolben, ausgerüstet mit Rührer, Thermometer, Wasserabscheider und Gaseinleitungsrohr werden 305 g ethoxyliertes Trimethylolpropan (OH-Zahl 550), 225 g Benzophenon-2-carbonsäure, 6,7 g p-Toluolsulfonsäure, 0,67 g Di-tert.-butylhydrochinon, 0,54 g p-Methoxyphenol und 135 g Toluol vorgelegt und unter Durchleiten von Stickstoff bis zu einer Säurezahl kleiner 8 entwässert. Anschließend werden 140 g Acrylsäure hinzugefügt und unter Durchleiten von Luft zügig entwässert. Nach Erreichen einer Säurezahl kleiner 5 wird das Lösungsmittel im Vakuum abdestilliert und der Rückstand bei 80-90 °C und 50 mbar unter Durchleiten von Luft desorbiert. Der ethylenisch ungesättigte benzophenonhaltige Photoinitiator kann ohne weitere Reinigung eingesetzt werden.

Photoinitiator II

In einem 2-l-Dreihalskolben, ausgerüstet mit Rührer, Thermometer, Wasserabscheider und Gaseinleitungsrohr werden 305 g ethoxyliertes Trimethylolpropan (OH-Zahl 550), 164 g Phenylglyoxylsäuremethylester und 4,7 g p-Toluolsulfonsäure bei 80-100 °C und Anlegen eines Vakuums umgeestert. Nach Beendigung der Reaktion werden 140 g Acrylsäure, 0,67 g Di-tert.-butylhydrochinon, 0,54 g p-Methoxyphenol und 130 g Toluol hinzugegeben und der Ansatz zügig unter Durchleiten eines geringen Luftstromes entwässert. Nach Erreichen einer Säurezahl kleiner 5 wird das Toluol im Vakuum abgetrennt und der Rückstand bei 80-90 °C und 50 mbar desorbiert. Der verbleibende ethylenisch ungesättigte Photoinitiator wird ohne weitere Reinigung eingesetzt.

## Beispiel 1

Die Oligoalkohole I und V wurden wie in Tabelle 1 angegeben mit einem Gemisch aus 4,4'- und 2,4-Diisocyanatodiphenylmethan (40/60) und Initiator II versetzt. Die erhaltene Mischung wurde zu ca. 2 g/m² auf eine durch Coronaentladung vorbehandelte Polyethylenfolie aufgetragen, eine Polyamidfolie aufkaschiert und der Verbund bei 50 m/min. auf einem regelbaren Transportband unter einem Hanovia-Strahler (80 W/cm, Abstand 8 cm) durch die Polyethylenfolie bestrahlt.

Tabelle 1

| Formulierung | 1a | 1b | 1c |
|---|---|---|---|
| Oligoalkohole | | | |
| I | 100 | — | |
| V | — | 100 | |
| IV | — | — | 100 |
| Initiator | | | |
| II | 6 | 6 | 6 |
| Diisocyanat | 9 | 16,5 | 22 |

Die Schälfestigkeit der Verbunde wurde sofort und nach 10 d ermittelt. Ergebnisse siehe Tabelle 2.

Tabelle 2

| | sofort | 10d | |
|---|---|---|---|
| Formulierung 1a | 1 | 5,4 | N/15 mm |
| Formulierung 1b | 0,9 | 3,7 | N/15 mm |
| Formulierung 1c | 1,1 | 4,2 | N/15 mm |

## Beispiel 2

Es wird wie in Beispiel 1 verfahren mit der Änderung, daß als Polyisocyanat das Umsetzungsprodukt aus 3 Mol Toluolendiisocyanat und ein Mol Trimethylolpropan verwandt wurde. Die in Tabelle 3 angegebenen Mischungen wurden geprüft.

Tabelle 3

| Formulierung | 2a | 2b | 2c | 2d | 2e |
|---|---|---|---|---|---|
| Oligoalkohole | | | | | |
| I | 100 | — | — | — | — |
| II | — | 100 | — | — | — |
| III | — | — | 100 | — | — |
| IV | — | — | — | 100 | — |
| V | — | — | — | — | 100 |
| Initiator | | | | | |
| I | — | — | 15 | 6 | — |
| II | 6 | 15 | — | — | 6 |
| Polyisocyanat | 16 | 6,5 | 9,5 | 40 | 30 |

Die Schälfestigkeiten wurden nach verschiedenen Bestrahlungszeiten (m/min) sofort und nach 3 d ermittelt. Ergebnisse siehe Tabelle 4.

Tabelle 4

| | Bestrahlungszeit | sofort | 3d | |
|---|---|---|---|---|
| Formulierung 2a | 30 m/min | 1,2 | 5,8 | N/15 mm |
| | 100 m/min | 0,7 | 6,1 | |
| Formulierung 2b | 50 m/min | 0,8 | 4,2 | |
| Formulierung 2c | 50 m/min | 0,5 | 3,7 | |
| Formulierung 2d | 30 m/min | 1,6 | 5,2 | |
| Formulierung 2e | 30 m/min | 1,4 | 5,8 | |

Beispiel 3

Es wurde wie im Anwendungsbeispiel 2 verfahren mit der Änderung, daß zusätzlich als Reaktivverdünner 5-Ethyl-5-methylolacryloyldioxan-1,3 (US-PS 4 076 727) verwandt wurde. Die in Tabelle 5 angegebenen Mischungen wurden geprüft.

Tabelle 5

| Formulierung | 3a | 3b | 3c |
|---|---|---|---|
| Oligoalkohole | | | |
| I | 100 | — | — |
| II | — | 100 | — |
| III | — | — | 100 |
| Initiator | | | |
| I | — | — | 15 |
| II | 15 | 15 | — |
| Reaktivverdünner | 50 | 50 | 50 |
| Polyisocyanat | 10 | 6,5 | 9,5 |

Die Schälfestigkeiten wurden nach einer Bestrahlungszeit von 50 m/min. sofort und nach 3 d ermittelt. Ergebnisse siehe Tabelle 6.

Tabelle 6

| | sofort | n. 3d | |
|---|---|---|---|
| Formulierung 3a | 1,1 | 5,4 | N/15 mm |
| Formulierung 3b | 1,2 | 4,7 | |
| Formulierung 3c | 0,7 | 3,2 | |

Beispiel 4

Es wurde wie in Anwendungsbeispiel 1 verfahren mit der Änderung, daß als Initiatoren Benzildimethylketal bzw. Benzophenon/Triethanolamin verwandt wurden. Die in Tabelle 7 angegebenen Mischungen wurden geprüft.

Tabelle 7

| Formulierung | 4a | 4b | 4c | 4d |
|---|---|---|---|---|
| Oligoalkohole | | | | |
| I | 100 | 100 | — | — |
| V | — | — | 100 | 100 |
| Benzyldimethylketal | 1,5 | — | 1,5 | |
| Benzophenon/ Triethanolamin | — | 1,5/1,5 | — | 1,5/1,5 |
| Diisocyanat | 9 | 9 | 16 | 16 |

Die Schälfestigkeit der Verbunde wurde nach einer Bestrahlungszeit von 30 m/min. sofort nach 3 d ermittelt. Ergebnisse siehe Tabelle 8.

Tabelle 8

| | sofort | n. 3d | |
|---|---|---|---|
| Formulierung 4a | 0,6 | 5,1 | N/15 mm |
| Formulierung 4b | 1,4 | 3,2 | |
| Formulierung 4c | 0,4 | 4,3 | |
| Formulierung 4d | 0,3 | 2,7 | |

Beispiel 5

Die Formulierungen in Tabelle 1 wurden wie in Beispiel 1 verarbeitet mit der Änderung, daß der Klebstoff vor der Kaschierung bei einer Bestrahlungsgeschwindigkeit von 10 m/min. direkt bestrahlt wurde. Die Schälfestigkeit der Verbunde wurde sofort und nach 1 d ermittelt. Ergebnisse siehe Tabelle 9.

Tabelle 9

| | sofort | n. 1d | |
|---|---|---|---|
| Formulierung 5a | 0,7 | 3,4 | N/15 mm |
| Formulierung 5b | 0,7 | 3,2 | |

Vergleichsbeispiel

Zu Vergleichszwecken wurden ein Polyalkohol (Alkohol A : ethoxyliertes Trimethylolpropan, OH-Zahl 250, Alkohol B : sowohl propoxyliertes als auch ethoxyliertes Trimethylolpropan, OH-Zahl 174), ein Gemisch aus 4,4'- und 2,4-Diisocyanatodiphenylmethan (40/60) und gegebenenfalls ein Photoinitiator wie in Tabelle 10 angegeben vermischt.

Tabelle 10

| Formulierung | 5c | 5d | 5e | 5f | 5g | 5h |
|---|---|---|---|---|---|---|
| Alkohol A | 100 | 100 | 100 | — | — | — |
| Alkohol B | — | — | — | 100 | 100 | 100 |
| Diisocyanat | 65 | 65 | 65 | 52 | 52 | 52 |
| Initiator I | 3 | — | — | 3 | — | — |
| Initiator II | — | 3 | — | — | 3 | — |

Die erhaltenen Mischungen wurden jeweils zu ca. 2 g/m² auf eine durch Coronaentladung vorbehandelte Polyethylenfolie aufgetragen, eine Polyamidfolie aufkaschiert und der Verbund bei a) 5 m/min, b) 20 m/min und c) 50 m/min auf einem regelbaren Transportband unter einem Hanovia-Strahler (80 W/cm, Abstand 8 cm) durch die Polyethylenfolie bestrahlt.

Bei keiner der geprüften Proben konnte eine Anfangshaftung größer 0,3 N/15 mm gemessen werden.

**Patentansprüche**

1. Verfahren zum Verkleben von Folien mit sich selbst oder anderen Substraten durch Auftragen eines mittels energiereicher Strahlung vernetzbaren Klebstoffs auf die zu verklebende Folie in einer Schichtdicke von 0,5-5 µm, Zusammenführen der beschichteten Folie mit sich selbst oder dem genannten Substrat unter vorhergehender, gleichzeitiger oder nachträglicher Vernetzung des auf die Folie aufgetragenen Klebstoffs durch energiereiche Strahlung, dadurch gekennzeichnet, daß man als Klebstoff, gegebenenfalls einen Fotoinitiator und gegebenenfalls copolymerisierbare Monomere, sowie gegebenenfalls weitere Hilfs- und Zusatzstoffe enthaltende Zweikomponenten-Gemische bestehend aus

A. mindestens einem Polyisocyanat und

B. mindestens einer, sowohl (i) (Meth)Acryloylgruppen als auch (ii) Hydroxylgruppen aufweisenden, Verbindung

in einem Äquivalentverhältnis von Hydroxylgruppen zu Isocyanatgruppen von 0,8 : 1 bis 1,3 : 1 entsprechenden Mengen, verwendet.

2. Verfahren gemäß Anspruch 1 zur Herstellung von Folienverbunden, dadurch gekennzeichnet, daß man mindestens eine der miteinander zu verbindenden Folien mit dem Klebstoff beschichtet und den Klebstoff vor und/oder während und/oder nach dem zusammenführen der Folien zur Verbundfolie durch Elektronenstrahlen oder UV-Licht vernetzt.

3. Verfahren gemäß Anspruch 1 und 2, dadurch gekennzeichnet, daß man als Komponente A aromatische Diisocyanate ausgewählt aus der Gruppe bestehend aus 2,4-Diisocyanatotoluol, 2,6-Diisocyanatotoluol, Gemischen dieser Isomeren, 2,4'-Diisocyanatodiphenylmethan 4,4'-Diisocyanatodiphenylmethan und Gemischen dieser genannten Isomeren oder Isocyanatgruppen aufweisende Umsetzungsprodukte derartiger Diisocyanate mit 2- und/oder 3-wertigen Alkoholen des Molekulargewichtsbereichs 62-700 verwendet.

4. Verfahren gemäß Anspruch 1 bis 3, dadurch gekennzeichnet, daß man als Komponente B) eine Hydroxylgruppen und (Meth)Acryloylgruppen aufweisende Verbindung oder Gemische derartiger Verbindungen verwendet, welche (im statistischen Mittel) pro Molekül 1 bis 3 Hydroxylgruppen bei einer OH-Zahl von 20 bis 600 und in Form der (Meth)Acryloylgruppen pro 100 Molekulargewichtseinheiten 0,012 bis 1,12 olefinische Doppelbindungen aufweisen.

## Claims

1. Process for bonding films to one another or to other substrates by applying an adhesive which is cross-linkable by means of high-energy radiation on to the film to be bonded in a layer thickness of 0.5-5 μm, contacting the coated film with a film of the same type or with the stated substrate and crosslinking the adhesive applied to the film, by high-energy radiation, before, during or after said contacting, characterised in that two-component mixtures which consist of

A. at least one polyisocyanate and

B. at least one compound containing both (i) (meth)acryloyl groups and (ii) hydroxyl groups,

in quantities corresponding to an equivalent ratio of hydroxyl groups to isocyanate groups of 0.8 : 1 to 1.3 : 1, and which optionally contain a photoinitiator and optionally copolymerisable monomers, and optionally other auxiliaries and additives, are used as the adhesive.

2. Process according to Claim 1 for the production of film laminates, characterised in that at least one of the films to be bonded to one another is coated with the adhesive and the adhesive is cross-linked by electron beams or UV light before and/or during and/or after the contacting of the films to form the laminated film.

3. Process according to Claim 1 and 2, characterised in that aromatic diisocyanates selected from the group consisting of 2,4-diisocyanatotoluene, 2,6-diisocyanatotoluene, mixtures of these isomers, 2,4'-diisocyanatodiphenylmethane, 4,4'-diisocyanatodiphenylmethane and mixtures of these stated isomers or reaction products, containing isocyanate groups, of such diisocyanates with 2- and/or 3-hydric alcohols of the molecular weight range of 62-700, are used as component A.

4. Process according to Claim 1 to 3, characterised in that a compound containing hydroxyl groups and (meth)acryloyl groups, or mixtures of such compounds which contain (on a statistical average), at an OH number of 20 to 600, 1 to 3 hydroxyl groups per molecule, and 0.012 to 1.12 olefinic double bonds, in the form of the (meth)acryloyl groups, per 100 molecular weight units, are used as component B).

## Revendications

1. Procédé de collage de feuilles avec elles-mêmes ou avec d'autres substrats par application d'un adhésif réticulable au moyen d'un rayonnement de forte énergie sur la feuille à coller en une épaisseur de couche de 0,5 à 5 μm, application de la feuille revêtue contre elle-même ou contre le substrat mentionné avec réticulation préalable, simultanée ou ultérieure de l'adhésif porté par la feuille par un rayonnement fortement énergétique, caractérisé en ce qu'on utilise comme adhésif des mélanges à deux composants contenant éventuellement un photoinitiateur et, le cas échéant, des monomères copolymérisables ainsi que, le cas échéant, d'autres adjuvants et additifs, constitués par

A. au moins un polyisocyanate et

B. au moins un composé porteur tant (i) de groupes (méth)acryloyle que (ii) de groupes hydroxyle,

en quantités correspondant à un rapport d'équivalents des groupes hydroxyle aux groupes isocyanate de 0,8 : 1 à 1,3 : 1.

2. Procédé suivant la revendication 1 pour l'obtention de composites formés de feuilles, caractérisé en ce qu'on enduit d'adhésif au moins une des feuilles à relier ensemble et on réticule l'adhésif avant et/ou pendant et/ou après la réunion des feuilles pour former la feuille composite, par des faisceaux d'électrons ou par la lumière ultraviolette.

3. Procédé suivant les revendications 1 et 2, caractérisé en ce qu'on choisit comme composant A des diisocyanates aromatiques du groupe comprenant le 2,4-diisocyanatotoluène, le 2,6-diisocyanatotoluène,

des mélanges de ces isomères, le 2,4'-diisocyanatodiphénylméthane, le 4,4'-diisocyanatodiphénylméthane et des mélanges de ces isomères mentionnés ou des produits de réaction, porteurs de groupes isocyanate, de ces diisocyanates avec des alcools divalents et/ou trivalents de poids moléculaires compris dans l'intervalle de 62 à 700.

4. Procédé suivant les revendications 1 à 3, caractérisé en ce qu'on utilise comme composant B) un composé porteur de groupes hydroxyle et de groupes (méth)acryloyle ou des mélanges de tels composés qui présentent (en moyenne statistique) par molécule 1 à 3 groupes hydroxyle avec un indice d'hydroxyle de 20-600 et 0,012 à 1,12 double liaison oléfinique sous la forme des groupes (méth)acryloyle, pour 100 unités de poids moléculaire.